Europäisches Patentamt

European Patent Office

Office européen des brevets

(19)

(11) Veröffentlichungsnummer: **0 140 196**
**B1**

(12) # EUROPÄISCHE PATENTSCHRIFT

(45) Veröffentlichungstag der Patentschrift:
03.06.87

(51) Int. Cl.⁴: **F 16 C 13/00, D 21 G 1/00**

(21) Anmeldenummer: **84111789.8**

(22) Anmeldetag: **03.10.84**

(54) Kalander.

(30) Priorität: **17.10.83 CH 5630/83**

(43) Veröffentlichungstag der Anmeldung:
**08.05.85 Patentblatt 85/19**

(45) Bekanntmachung des Hinweises auf die Patenterteilung:
**03.06.87 Patentblatt 87/23**

(84) Benannte Vertragsstaaten:
**AT DE FR GB IT SE**

(56) Entgegenhaltungen:
**EP - A - 0 091 586**
**FR - A - 2 504 951**
**GB - A - 2 068 482**
**GB - A - 2 091 150**

(73) Patentinhaber: **Sulzer - Escher Wyss AG,**
**Hardstrasse 319, CH-8023 Zürich (CH)**

(72) Erfinder: **Schneid, Josef, Ruttshalde 6, D-7981 Vogt (DE)**
Erfinder: **Steidele, Andreas, Beethovenstrasse 3,**
**D-7984 Wolpertswende-Mochenwangen (DE)**

(74) Vertreter: **Paschedag, Hansjoachim et al, c/o Sulzer -**
**Escher Wyss AG Patentabteilung Postfach,**
**CH-8023 Zürich (CH)**

## Beschreibung

Die Erfindung betrifft einen Kalander mit mehreren, wenigstens in einer Pressrichtung beweglichen Walzen, von denen zumindest eine als Rohrwalze ausgebildet ist, welche einen feststehenden Träger und einen um diesen rotierbaren und über seine gesamte Länge in Radialrichtung bewegbaren Walzenmantel aufweist, der gegenüber dem Träger mittels mit Druckmittel versorgten und eine Stützkraft auf den Walzenmantel ausübenden Druckelementen abgestützt ist, wobei wenigstens ein Positionsfühler zur Bestimmung der Position wenigstens einer Walze und eine Regeleinrichtung mit einstellbarem Sollwert zur Regelung der Position der Walzen vorgesehen ist.

Bei solchen, z.B. aus US-A-4 357 743, FR-A-2 504 951 oder GB-A-2 091 150 bekannten Kalandern ist die unterste und gegebenenfalls auch die oberste Walze als Rohrwalze, beispielsweise gemäss US-A-3 885 283, mit in Vertikalrichtung, also in der Pressebene gegenüber dem Träger beweglichen Walzenmantel ausgebildet. Die gesamte Walzenanordnung würde daher in Pressrichtung schwimmen, d.h. die Position der Walzspalte wäre undefiniert, selbst wenn alle Kräfte im Gleichgewicht sind. Um die gewünschte und erforderliche Position der Walzen und damit der Walzspalte festzulegen, sind daher Positionsfühler vorgesehen, die die Position des Walzenmantels an den Enden gegenüber dem Träger oder der Stuhlung feststellen, und die eine Regeleinrichtung ansteuern, welche den Druck des Druckmittels für die Stützelemente so regelt, dass der Walzenmantel und damit auch die Walzspalte die vorgesehene Position einnehmen. Bei Anordnung je eines Positionsfühlers an beiden Seiten des Walzenmantels kann dabei gleichzeitig durch eine Differenzregelung eine vorbestimmte Lage der Walzen eingehalten werden. Kalander dieser Art werden z.B. zur Metall-, Papier-, Kunststoffolien- oder Textil-Herstellung verwendet. Dabei durchläuft die zu glättende, zu walzende oder zu bearbeitende Warenbahn die durch die einzelnen Walzen gebildeten Walzspalte nacheinander. Die Öffnung eines solchen Kalanders und der Walzspalte erfolgt, wie z.B. in US-A-3 884 191 beschrieben, in der Weise, dass die Regeleinrichtung für den Druck des Druckmittels für die Stützelemente zurückgestellt wird, so dass die einzelnen Walzen bis zu jeweils einem Anschlag absinken, wobei die einzelnen Anschläge so gewählt sind, dass zwischen sämtlichen Walzen jeweils ein Spalt entsteht. Nach Einführung der Warenbahn oder nach Austausch einer Walze wird die Regeleinrichtung wieder eingeschaltet und die gesamte Walzenanordnung wieder auf die vorgesehene Position gebracht, wobei sich die Walzspalte wieder schliessen.

Bei diesen vorbekannten Kalandern und Walzenanordnungen ist lediglich vorgesehen, dass die Regeleinrichtung die Walzenposition auf einen vorbestimmten oder gemäss FR-A-2 504 951 einstellbaren Sollwert einregelt, wobei aber stets die gesamte Walzenanordnung und deren gesamtes Gewicht wirksam wird. In der Praxis besteht jedoch das Bedürfnis nach einer grösseren Flexibilität der Kalanderverwendung, d.h. es sollen mit dem gleichen Kalander ohne aufwendige Umbauten verschiedenartige Materialien bearbeitet oder unterschiedliche Bearbeitungen erreicht werden können. Dazu wäre es notwendig, wahlweise entweder sämtliche Walzen des Kalanders, oder nur einen Teil derselben zu verwenden, d.h. die Anzahl der wirksamen Walzen sollte wählbar sein, je nach zu verarbeitendem Material. Ausserdem wäre ein Ausgleich von Durchmesseränderungen der Walzen, z.B. infolge Abschleifens während der Betriebsdauer wünschbar. Vorbekannte Kalander oder Walzenanordnungen der eingangs erwähnten Art, mit den Vorteilen der Verwendung von Durchbiegungseinstellwalzen konnten diese Bedürfnisse jedoch nicht oder nur mit grossem zusätzlichem Aufwand befriedigen.

Die Erfindung setzt sich die Aufgabe, die erwähnten Nachteile des Standes der Technik zu beseitigen und insbesondere den Kalander oder die Walzenanordnung der eingangs bezeichneten Gattung so zu verbessern und weiterzubilden, dass die Flexibilität bezüglich der Verwendung verbessert wird, ohne dass ein erheblicher zusätzlicher Aufwand erforderlich ist, wobei die Anzahl der wirksamen Walzen wählbar und veränderbar sein und sich schnell, einfach und unkompliziert auf verschiedene zu verarbeitende Materialien umstellen lassen soll.

Erfindungsgemäss wird diese Aufgabe dadurch gelöst, dass die Regeleinrichtung eingerichtet ist, die Position der Walzen auf mehrere, voneinander verschiedene Sollwerte zu regeln, bei denen jeweils eine vorbestimmte Soll-Anzahl von Walzen auf zugeordneten Anschlägen aufliegt.

Durch diese Regelung in verschiedenen Stufen kann erreicht werden, dass je nach eingestelltem Positionswert nur eine bestimmte wählbare Anzahl von unteren Walzen in Vertikalrichtung beweglich und daher mit ihrem Gewicht Pressdrücke in den Walzspalten ausüben, während die restlichen oberen Walzen auf jeweiligen Anschlägen aufliegen und keinen Beitrag zum Pressprozess leisten.

Es kann zweckmässig sein, die Anzahl der Stufen oder Positionswerte gleich der Anzahl der Walzspalte zu wählen, so dass für jede Einstellung eine andere Anzahl von Walzen wirksam ist. Jedoch kann mit Vorteil auch eine grössere Anzahl von möglichen Positionswerten vorgesehen sein, um eine bessere Feineinstellung und einen Ausgleich von Walzendurchmesseränderungen zu erreichen, bis herab zu einer durch Digitalwerte steuerbaren numerischen Regelung mit sehr feinen Stufen oder kontinuierlichem Verlauf, oder einer Analogregelung.

Die Erfindung wird anhand der in den Figuren wiedergegebenen Ausführungsbeispiele näher erläutert. Es zeigen:

Fig. 1 einen Kalander mit Durchbiegungseinstellwalzen und Regeleinrichtung in schematischer Darstellung,

Fig. 2 eine Durchbiegungseinstellwalze im Schnitt,

Fig. 3 einen Schnitt eines Endes der Walze mit einem Positionsfühler,

Fig. 4 einen Kalander in Seitenansicht.

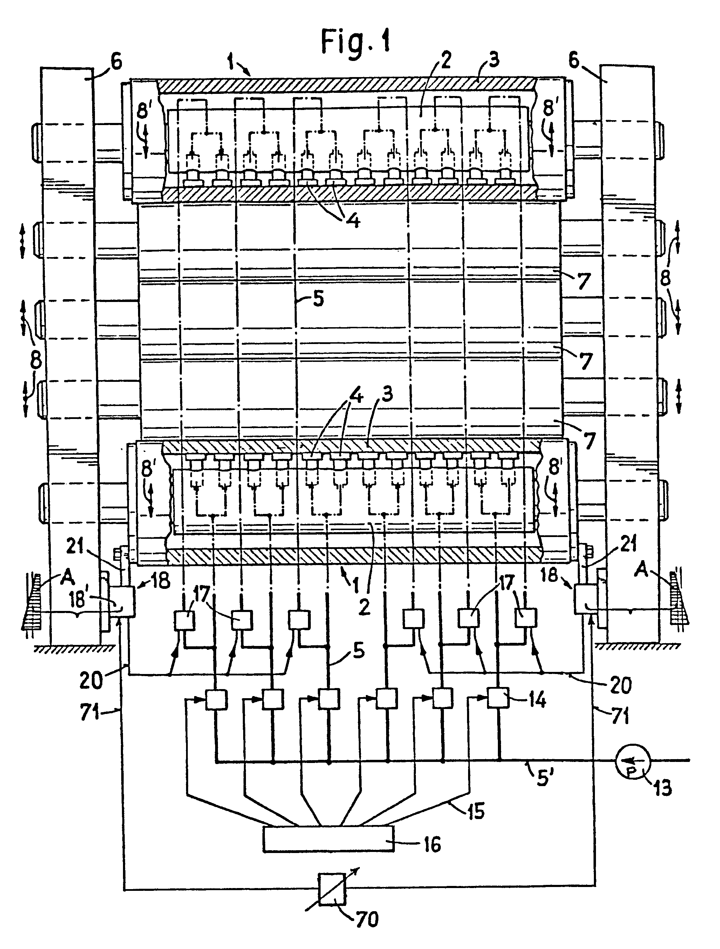

Die in der Fig. 1 dargestellte Walzvorrichtung enthält zwei Walzen 1, die nach der US-A-3 885 283 ausgebildet sind. Die Walzen 1 enthalten feststehende Träger 2, um welche rohrförmige Walzenmäntel 3 drehbar sind. In den Trägern sind zylinderartige Bohrungen für kolbenförmige, die Walzenmäntel (3) gegen die Träger (1) abstützende Druckelemente 4 vorgesehen, von welchen jeweils zwei eine Gruppe bilden, welche an eine hydraulische Druckleitung 5 angeschlossen sind. Es versteht sich, dass in Wirklichkeit jede Gruppe eine andere Anzahl von Druckelementen enthalten kann.

Wegen der Funktion der Druckelemente sei ausdrücklich auf die vorbekannte US-A-3 802 044 hingewiesen.

Die Enden der Träger 2 sind in Seitenteilen 6 einer schematisch angedeuteten Stuhlung abgestützt. Zwischen den Walzen 1 befinden sich Zwischenwalzen 7, die in der Stuhlung in geeigneten Führungen beweglich sind, wie es durch die Pfeile 8 angedeutet ist.

Wie ebenfalls durch Pfeile 8' angedeutet ist, sind auch die Walzenmäntel 3 in der Pressebene, in welcher sich die Achsen der Mäntel und der Zwischenwalzen 7 befinden, beweglich.

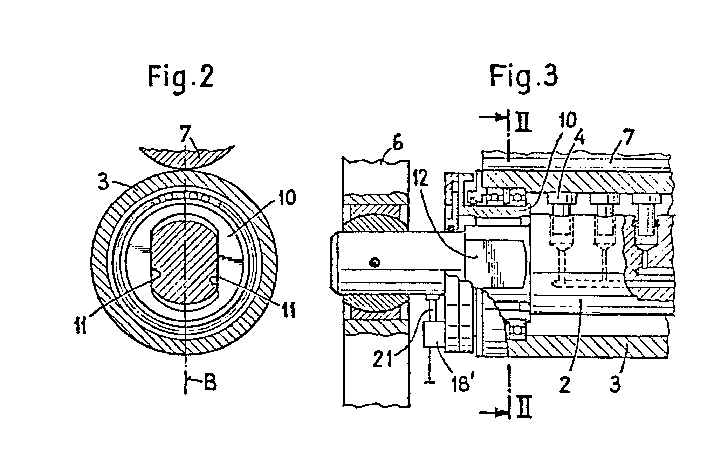

Wie aus den Fig. 2 und 3 erfolgt, ergibt sich diese Beweglichkeit dadurch, dass in den Walzenmänteln 3 an beiden Enden Büchsen 10 drehbar gelagert sind, die mit inneren Parallelführungen 11 versehen sind, die Träger 2 sind an der Stelle der Büchsen 10 mit parallelen Flächen 12 versehen, welche mit den Parallelführungen 11 zusammenwirken.

Wie weiter aus der Fig. 1 hervorgeht, werden die Druckleitungen 5, welche zu den Gruppen von Druckelementen 4 führen, durch eine Pumpanlage 13 mit dem hydraulischen Druckmedium versorgt. In den Ästen der Druckleitungen 5, welche von einer gemeinsamen Verteilleitung 5' abzweigen, sind Presskraftregler 14 geschaltet, welche ihre Sollwertsignale über Steuerleitungen 15 von einem Steuergerät 16 erhalten, welche die Presskraft zwischen jeweils einer oben und einer unten befindlichen Gruppe von Druckelementen 4 regelt.

Dabei wirkt der durch die Presskraftregler 14 eingestellte hydraulische Druck auf die Druckelemente 4 der unteren Walze 1 direkt, während in der zu den entsprechenden oberen Druckelementen 4 führenden Leitung 5 jeweils ein Differenzdruckregler 17 angeordnet ist, oder umgekehrt.

Die Differenzdruckregler 17 der Paare von oben und unten angeordneten zusammenwirkenden Gruppen der Druckelemente 4, die jeweils an eine gemeinsame Leitung 5 angeschlossen sind, stehen unter dem Einfluss von Signalen von Positionsfühler aufweisenden Positionsreglern 18, die ihnen über Signalleitungen 20 zugeführt werden, und wobei diese Signale sowohl von der Position des Walzenmantels als auch von Sollwertsignalen einer Steuereinrichtung 70 beeinflusst werden.

Der Signalverlauf der Positionsregler 18 ist schematisch durch Diagramme A angedeutet. Mit zunehmendem Hub des Walzenmantels 3 der unteren Walze gegenüber dem Gehäuse 18' des Positionsfühlers, das am Seitenteil 6 befestigt ist, vermindert sich entsprechend dem Diagramm A die Grösse des Sollwertsignals, was wieder eine kleinere, durch den Differenzdruckregler 17 verursachte Druckdifferenz zwischen den unteren Druckelementen 4 und den oberen Druckelementen 4 zur Folge hat. Die Bewegungen des Walzenmantels 3 werden durch einen Teil 21 gegenüber dem Gehäuse 18' festgestellt. Der Teil 21 ist gemäss der Darstellung mit der Büchse 10 aus der Fig. 3 verbunden und somit zusammen mit dem Mantel 3 beweglich.

Mittels der Positionsregler 18 und der Differenzdruckregler 17 ändert sich die Druckdifferenz zwischen den unteren und den oberen Stützelementen 4 also so lange, bis die Position des Walzenmantels 3 den vorgegebenen Wert angenommen hat, d.h. bis die Walzen und Walzspalte die vorgeschriebene Lage eingenommen haben.

Ausserdem ist bei der beschriebenen Regeleinrichtung von Vorteil, dass der rechte Positionsregler 18 verstärkt und von rechts nach links abnehmend auf die rechten Gruppen von Druckelementen 4 einwirkt, während der linke Positionsregler entsprechend verstärkt auf die linken Druckelementgruppen wirkt. Dadurch wird ausser der allgemeinen Position auch die Richtung des Walzenmantels geregelt, so dass dieser stets in vorgegebener Lage bleibt. Hinzu kommt noch der sich aus der Verwendung von Durchbiegungseinstellwalzen automatisch ergebende Vorteil, dass praktisch jede Durchbiegung der Walzenmäntel und der Zwischenwalzen entfällt.

Die Regeleinrichtung enthält weiterhin eine Steuereinrichtung 70, mit der den Positionsreglern 18 ein wählbarer Sollwert zugeführt werden kann. Die Positionsregler 18 liefern dann den Differenzdruckreglern 17 Signale entsprechend der Differenz der von den Fühlern der Positionsregler 18 festgestellten Position des Walzenmantels, abhängig von dem von der Steuereinrichtung 70 vorgegebenen Sollwert. Auf diese Weise stellt sich der Walzenmantel in einer Position entsprechend den jeweiligen Sollwerten ein.

Die Steuereinrichtung kann jedoch auch so ausgebildet sein, dass die Positionsregler 18, die im dargestellten Beispiel in Baueinheit mit dem Positionsfühler wiedergegeben sind, davon getrennt an geeigneter anderer Stelle, z.B. in Baueinheit mit den Reglern 17, angeordnet sind.

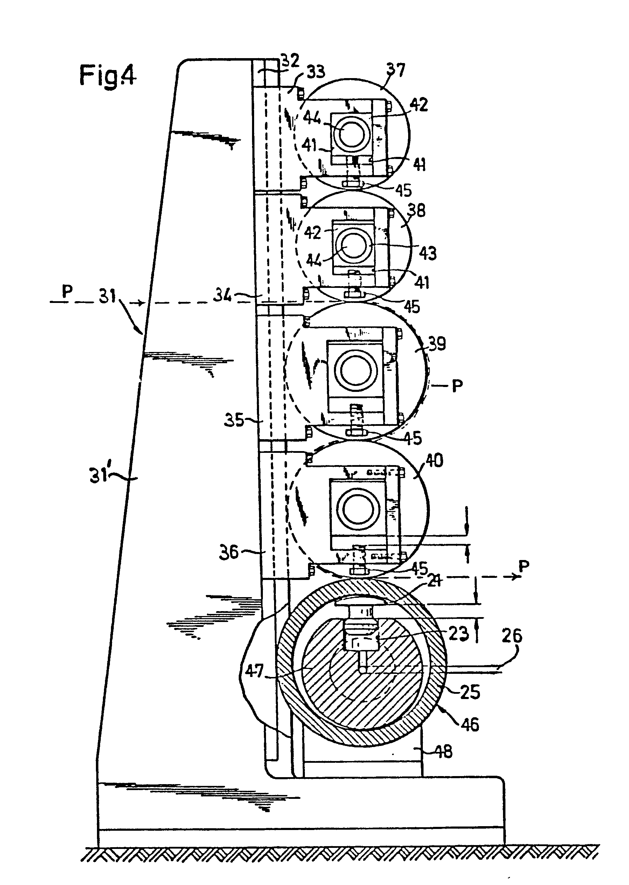

Die Steuereinrichtung 70 ist so ausgebildet, dass sie mehrere diskrete unterschiedliche Sollwerte abzugeben vermag, z.B. in einer der Zahl der Walzspalte entsprechenden Anzahl. Die Sollwerte werden dabei im Zusammenhang mit den für die einzelnen Walzen vorgesehenen Anschlägen gewählt, wie beispielsweise anhand von Fig. 4 erläutert.

Der in Fig. 4 schematisch dargestellte Kalander enthält einen Ständer 31, der zwei vertikale Seitenteile 31' aufweist. Jeder Seitenteil ist mit einer Führung 32 versehen, an welcher Lagerböcke 33, 34, 35, 36 von Walzen 37, 38, 39, 40 befestigt sind. Die Lagerböcke sind entlang der Führung 32 verstellbar und sind mit Führungen 41 versehen, in denen Lagerblöcke 42 der einzelnen Walzen geführt sind. Die Lagerblöcke 42 enthalten Lagerbüchsen 43, in welche Zapfen 44 der einzelnen Walzen drehbar gelagert sind. Die Bewegung der Lagerblöcke 42 nach unten ist nun durch Anschläge begrenzt, die im dargestellten Beispiel als Anschlagschrauben 45 ausgebildet sind. Die Anschläge 45 sind so eingestellt, dass sich bei geöffnetem Kalander, wenn alle Walzen auf den zugeordneten Anschlägen 45 aufliegen, zwischen sämtlichen Walzen ein Spalt bildet.

Die unterste Walze 46 ist als Durchbiegungseinstellwalze ausgebildet und weist einen feststehenden Träger 47 auf, der auf Stützen 48 abgestützt ist, welche am Ständer 31 befestigt sind. Um den Träger 47 ist ein Walzenmantel 25 drehbar, welcher auf hydrostatischen Stützelementen 24 gelagert ist, die in Zylinderbohrungen 23 geführte kolbenartige Teile aufweisen, wobei den Zylinderbohrungen über Leitungen 26 ein hydraulisches Druckmittel zuführbar ist.

Ein Abschalten der Druckmittelzufuhr bewirkt, dass die Stützelemente 24 in ihre tiefste Stellung sinken, und dass sämtliche Walzen auf die zugeordneten Anschläge 45 absinken, so dass zwischen allen Walzen, wie vorstehend beschrieben, ein offener Spalt gebildet wird. Wenn nun durch die zugehörige Regelschaltung die Druckmittelzufuhr wieder eingeschaltet wird, so werden die Stützelemente 24 nach oben gedrückt und heben den Walzenmantel 25 so weit ab, dass dieser die nächstunterste Walze 40 vom Anschlag abhebt, so dass der unterste Walzspalt geschlossen wird, während die oberen Walzen noch auf ihren Anschlägen aufliegen und die oberen Spalte offen bleiben. Erst bei weiterer Drucksteigerung wird zunächst die drittunterste Walze 39 ebenfalls angehoben und der Spalt zwischen den Walzen 39 und 40 ebenfalls geschlossen, so dass für eine Materialbearbeitung nunmehr zwei Walzspalte zur Verfügung stehen. Bei einer weiteren Drucksteigerung durch die Regeleinrichtung wird dann die nächste Walze 38 angehoben und schliesslich die oberste Walze 37, so dass nunmehr sämtliche Walzspalte wirksam sind.

Durch die Regeleinrichtung lassen sich also in der genannten Weise durch eine einfache Regelung der Position der untersten Walze, bzw. deren Mantel 46, eine beliebig wählbare Anzahl von Walzen zuschalten und wirksam machen, während die restlichen oberen Walzen unwirksam auf ihren Anschlägen ruhen. In Fig. 4 ist der Fall gezeigt, wo die vier untersten Walzen oder die drei untersten Walzspalte auf die Warenbahn P wirken. Es ist also möglich und es genügt überdies, die Sollwerte für die Positionsregelung so oder in einem solchen Abstand voneinander zu wählen, dass bei jeder Steigerung des Sollwertes um eine Stufe eine Walze mehr abgehoben und wirksam gemacht wird, und ein weiterer Walzspalt zugeschaltet wird. Die Anzahl der Sollwerte für die Walzenmantel-Position kann also auf die Anzahl der brauchbaren Walzspalte beschränkt sein. Unter Umständen kann es jedoch auch vorteilhaft sein, eine feinstufigere oder kontinuierliche Regelung mit einer grösseren Anzahl von einstellbaren Sollwerten vorzusehen, z.B. wenn ein Ausgleich von Positionsänderungen durch Änderung von Walzendurchmessern erforderlich ist. Eine feinstufige Regelung lässt sich beispielsweise auch mit einer durch Eingabe von Digitalwerten steuerbaren numerischen Regelung, z.B. mittels eines Mikroprozessors, erreichen. Auch abweichende Regelverfahren sind im Rahmen des Erfindungsgedankens möglich, etwa eine mechanische, optische, hydraulische oder pneumatische Einstellung der Sollwerte, anstelle einer elektrischen Einstellung des Schwellenwertes der Positionsfühler, oder auch anders geartete Regelschaltungen.

Auch in anderer Hinsicht ist die Erfindung nicht auf die im Detail beschriebenen Ausführungsbeispiele beschränkt, und Abwandlungen im Rahmen des Erfindungsgedankens sind möglich. So brauchen beispielsweise die Walzen nicht, wie im bevorzugten Ausführungsbeispiel gezeigt, vertikal übereinander angeordnet zu sein, sondern können auch schräg oder horizontal positioniert sein, um den Einfluss des Eigengewichtes der Walzen auszuschalten oder zu vermindern. Die Positionsfühler können statt an der untersten Walze auch an einer beliebigen anderen oder auch an mehreren Walzen vorgesehen sein. Ebenso können die Rohrwalzen auch in anderer Art ausgebildet und mit andersartigen Stützelementen versehen sein als die dargestellten Durchbiegungseinstellwalzen mit hydrostatischen Stützkolben, z.B. mit hydrodynamischen Stützelementen oder mit Stützelementen in Form von Druckkammern.

Weiter wird bemerkt, dass die Positionsfühler von beliebigem geeignetem Typ sein können, z.B. mechanische, optische, elektrische oder hydraulische Fühler. Auch die Anzahl der Positionsfühler kann beliebig sein. Statt zweier Fühler an den Walzenenden kann auch ein einziger Fühler, z.B. ein optischer Fühler, vorgesehen sein, der die gesamte Breite der Walze berührungslos überwacht. Ebenso kann die Regelung der Walzen-Position auf verschiedene Weise vorgenommen werden. z.B. elektrisch, hydraulisch, mechanisch oder optisch.

## Patentansprüche

1. Kalander mit mehreren, wenigstens in einer Pressrichtung beweglichen Walzen (1, 7, 37, 38, 39, 40, 46), von denen zumindest eine Walze (1, 46) als Rohrwalze ausgebildet ist, welche einen feststehenden Träger (2, 47) und einen um diesen rotierbaren und über seine gesamte Länge in Radialrichtung bewegbaren Walzenmantel (3, 25) aufweist, der gegenüber dem Träger mittels mit Druckmittel versorgten und eine Stützkraft auf den Walzenmantel ausübenden Druckelementen (4, 24) abgestützt ist, wobei wenigstens ein Positionsfühler (18) zur Bestimmung der Position wenigstens einer Walze und eine Regeleinrichtung (18) mit einstellbarem Sollwert zur Regelung der Position der Walze vorgesehen ist, dadurch gekennzeichnet, dass die Regeleinrichtung (17, 18, 70) eingerichtet ist, die Position der Walzen (3, 25) auf mehrere, voneinander verschiedene Sollwerte zu regeln, bei denen jeweils eine vorbestimmte Anzahl von Walzen (1, 7, 37, 38, 39, 40) auf zugeordneten Anschlägen (45) aufliegt.

2. Kalander nach Anspruch 1, dadurch gekennzeichnet, dass die Walze (1), deren Position geregelt wird, als Rohrwalze mit einem rotierbaren Walzenmantel (3) ausgebildet ist und dass der Positionsfühler (18) eingerichtet und angeordnet ist, die Position des Walzenmantels (3) zu bestimmen und der Regeleinrichtung (17) als Regelgrösse zuzuführen.

3. Kalander nach Anspruch 2, dadurch gekennzeichnet, dass wenigstens eine der beiden äusseren Walzen (1, 46) als Rohrwalze ausgeführt ist.

4. Kalander nach Anspruch 3, dadurch gekennzeichnet, dass die beiden äusseren Walzen (1) als Rohrwalzen ausgebildet sind und dass die Regeleinrichtung Differenzdruckregler (17) aufweist, die die Position des Walzenmantels (3) in Abhängigkeit von den von den Positionsfühlern (18) gelieferten Regelgrössen und von Sollwerten zu regeln vermögen.

5. Kalander nach einem der Ansprüche 1 bis 4, dadurch gekennzeichnet, dass die Anzahl der Sollwerte der Anzahl der möglichen Walzspalte zwischen den Walzen (37, 38, 39, 40, 46) entspricht.

6. Kalander nach einem der Ansprüche 1 bis 5, dadurch gekennzeichnet, dass die Regeleinrichtung als durch Digitalwerte steuerbare numerische Regelung ausgebildet ist.

## Claims

1. Calender with several rollers (1, 7, 37, 38, 39, 40, 46) which are movable at least in one pressing direction, at least one roller of which (1, 46) is constructed as a tube roller, which has a fixed carrier (2, 47) and a roller shell (3, 25) which is rotatable about the latter and is movable over its entire length in the radial direction, which roller shell is supported with respect to the carrier by means of pressure elements (4, 24) which are supplied with pressure medium, and which exert a supporting force onto the roller wheel, at least one position sensor (18) being provided for determining the position of at least one roller and a regulating device (17) with an adjustable desired value being provided for regulating the position of the roller, characterised in that the regulating device (17, 18, 70) is set up to regulate the position of the rollers (3, 25) to several desired values which differ from each other, in which in each case a predetermined number of rollers (1, 7, 37, 38, 39, 40) rests on associated stops (45).

2. Calender according to Claim 1, characterised in that the roller (1), the position of which is regulated, is constructed as a tube roller with a rotatable roller shell (3) and that the position sensor (18) is set up and arranged to determine the position of the roller shell (3) and supply it to the regulating device (17) as a regulating quantity.

3. Calender according to Claim 3, characterised in that at least one of the two outer rollers (1, 46) is constructed as a tube roller.

4. Calender according to Claim 3, characterised in that the two outer rollers (1) are constructed as tube rollers and that the regulating device has differential pressure regulators (17), which are able to regulate the position of the roller shell (3) in dependence upon the regulating quantities supplied by the position sensors (18) and on desired values.

5. Calender according to one of Claims 1 to 4, characterised in that the number of the desired values corresponds to the number of the possible roll gaps between the rollers (37, 38, 39, 40, 46).

6. Calender according to one of Claims 1 to 5, characterised in that the regulating device is constructed as a numerical regulating arrangement which is controllable by digital values.

## Revendications

1. Calandre avec plusieurs rouleaux (1, 7, 37, 38, 39, 40, 46) mobiles au moins dans une direction de pressage, dont au moins un (1, 46) est constitué par un rouleau tubulaire qui présente un support fixe (2, 47) et un bandage (3, 25) de rouleau, mobile en direction radiale sur toute sa longueur, qui est appuyé au support au moyen d'organes de pression (4, 24) alimentés en fluide de pression et qui exercent une force d'appui sur le bandage de rouleau, au moins un détecteur de pression (18) étant prévu pour la détermination de la position d'au moins un rouleau ainsi qu'un dispositif (18) de réglage avec une valeur de consigne réglable pour le réglage de la position du rouleau, caractérisée par le fait que le dispositif de réglage (17, 18, 70) est installé en vue de régler la position des rouleaux (3, 25) à plusieurs valeurs de consigne, différentes les unes des autres, avec lesquelles dans chaque cas un certain nombre de rouleaux (1, 7, 37, 38, 39, 40) reposent sur des butées (45) disposées à cet effet.

2. Calandre selon la revendication 1, caractérisée par le fait que le rouleau (1), dont la position est réglée, est constitué d'un rouleau tubulaire avec un bandage (3) de rouleau rotatif, et que le détecteur de position est installé et agencé pour déterminer la position du bandage (3) de rouleau et à la délivrer sous forme de donnée de réglage du dispositif de réglage (17).

3. Calandre selon la revendication 2, caractérisée par le fait qu'au moins un des deux rouleaux extrêmes (1, 46) est réalisé sous forme d'un rouleau tubulaire.

4. Calandre selon la revendication 3, caractérisée par le fait que les deux rouleaux extrêmes (1) sont réalisés sous forme de rouleaux tubulaires et que le dispositif de réglage présente des régulateurs différentiels de pression (17) qui sont capables de régler la position du bandage (3) de rouleau en fonction des valeurs prescrites et des mesures de réglage délivrées par les détecteurs (18) de position.

5. Calandre d'après l'une des revendications 1 à 4, caractérisée par le fait que le nombre des valeurs prescrites correspond au nombre des fentes de calandrage possibles entre les rouleaux (37, 38, 39, 40, 46).

6. Calandre d'après l'une des revendications 1 à 5, caractérisée par le fait que le dispositif de réglage est constituée par un réglage numérique pilotable par des valeurs digitales.

Fig.1

# Fig.2

# Fig.3

Fig.4